# FASCICULE DE BREVET EUROPEEN

(11) **EP 3 909 843 B1**
(45) Date de publication et mention de la délivrance du brevet: **05.10.2022**
(21) Numéro de dépôt: 21167998.0
(22) Date de dépôt: 13.04.2021
(51) Int. Cl.: B64C 1/06

(54) **ASSEMBLAGE DE RAIDISSAGE D'UN FUSELAGE D'AÉRONEF, COMPRENANT DES RAIDISSEURS LONGITUDINAUX COMPOSÉS DE PORTIONS JOINTES ENTRE ELLES**
VERSTEIFUNGSANORDNUNG EINES FLUGZEUGRUMPFES MIT LÄNGSVERSTEIFUNGEN, DIE AUS MITEINANDER VERBUNDENEN ABSCHNITTEN BESTEHEN
ASSEMBLY FOR STIFFENING AN AIRCRAFT FUSELAGE, COMPRISING LONGITUDINAL STIFFENERS MADE UP OF PORTIONS JOINED TOGETHER

(30) Priorité: 14.05.2020 FR 2004759
(43) Date de publication de la demande: 17.11.2021
(73) Titulaire: AIRBUS OPERATIONS (S.A.S.), 31060 Toulouse (FR); Airbus (S.A.S.), 31700 Blagnac (FR)
(72) Inventeur: TROUVE, Rodolphe, 31060 TOULOUSE Cedex 9 (FR); MARCHIPONT, Yann, 31060 TOULOUSE Cedex 9 (FR); CABANAC, Jean-Pierre, 31700 BLAGNAC (FR); DUPEROU, Thierry, 31060 TOULOUSE Cedex 9 (FR); QUINTIN, Rémi, 31100 TOULOUSE (FR)
(74) Mandataire: Gicquel, Olivier Yves Gérard

(56) Documents cités:
- EP-A1- 3 333 065
- DE-A1-102007 055 233
- FR-A1- 3 000 019
- US-A1- 2015 034 766

## Description

L'invention a trait à un assemblage de raidissage d'un fuselage d'aéronef comprenant des raidisseurs longitudinaux composés de portions jointes entre elles.

On s'intéresse précisément aux raccordements entre les raidisseurs longitudinaux du fuselage, appelés lisses, et les raidisseurs transversaux et circulaires, appelés cadres, par des pièces d'attache appelées généralement « clips ». Ces pièces d'attache ont typiquement une section coudée en L et sont composées principalement d'une embase posée sur des semelles planes - elles-mêmes posées sur le fuselage - de deux lisses voisines, et d'une nervure à angle droit avec l'embase et en appui sur une âme plane d'un des cadres. La nervure est unie au cadre et l'embase est unie à la semelle à des points de fixation.

Cet assemblage doit résister à des efforts mécaniques pouvant être importants et de genres variés (traction sur les points de fixation, torsion des attaches, etc.), ce qui oblige à prévoir un nombre suffisant des points de fixation. On est alors amené à rendre les semelles des lisses plus étroites entre les emplacements des attaches afin d'alléger le raidissage, mais plus large à l'emplacement des attaches, au point de les rendre presque jointives, pour permettre une superficie d'appui importante et un nombre de points de fixation accru entre l'embase et la semelle. La forme des semelles des lisses devient ainsi irrégulière, avec des excroissances latérales nombreuses se succédant à un pas régulier ou non.

Il est alors usuel de construire les lisses avec une semelle uniformément large, puis de retirer la largeur superflue aux endroits situés entre les attaches par un découpage ou une autre opération d'usinage. Un inconvénient de cette façon de procéder est que la matière enlevée est perdue, notamment si les lisses sont en matière composite à polymère thermodurcissable ou thermoplastique.

Le document US2015/034766 décrit un assemblage pour raidir un fuselage d'aéronef, comprenant des lisses longitudinales, des cadres transversaux croisant les lisses et des attaches reliant les lisses aux cadres. Les lisses comprennent chacune une semelle posée sur le fuselage, les attaches comprennent une embase posée sur les lisses en chevauchant les semelles de deux lisses voisines.

On se propose donc d'améliorer de tels assemblages de raidissage de fuselage d'aéronef, afin d'éviter ces pertes de matériau sans altérer la forme ou les dimensions des lisses existantes et sans diminuer les qualités des assemblages existants et notamment leur résistance mécanique. Sous une forme générale, l'invention est relative à un assemblage de raidissage d'un fuselage d'aéronef, comprenant des lisses longitudinales, des cadres transversaux croisant les lisses et des attaches reliant les lisses aux cadres, les lisses comprenant chacune une semelle posée sur le fuselage, les attaches comprenant une embase posée sur les lisses en chevauchant les semelles de deux lisses voisines, caractérisé en ce que les lisses sont composées d'une portion principale à section uniforme et de plaques fabriquées séparément de la portion principale puis unies intimement à elle, les plaques étant distantes les unes des autres le long des lisses et situées entre les embases des attaches et le fuselage.

Les lisses sont donc fabriquées à l'origine avec une semelle étroite à laquelle on ajoute les plaques avant d'unir l'ensemble de manière intime, c'est-à-dire avec continuité de matière et sans moyens de fixation distincts, afin de rétablir la forme souhaitée des lisses. Selon diverses caractéristiques optionnelles de l'invention :
- les embases des attaches comprennent un point de fixation extrême, ou une rangée extrême de points de fixation dirigée transversalement, reliant les attaches à la portion principale de chacune desdites lisses voisines, et des points de fixation intermédiaires reliant les attaches à une des plaques de chacune desdites lisses voisines ;
- le point de fixation extrême ou la rangée extrême est unique pour chacune desdites lisses voisines, et les points de fixation intermédiaire sont uniques pour chacune desdites lisses voisines ;
- les portions principales et les plaques sont en polymère thermodurcissable ou thermoplastique ;
- le polymère thermodurcissable ou thermoplastique de la portion principale diffère du polymère thermodurcissable ou thermoplastique des plaques pour chacune des lisses ;
- les portions principales et les plaques sont unies par des interfaces planes ;
- les interfaces planes sont obliques dans l'épaisseur des plaques.

L'invention sera maintenant décrite plus complètement dans ses différents aspects, caractéristiques et avantages, en liaison aux figures suivantes, qui illustrent certains de ses modes de réalisation, donnés à titre purement illustratif :
[Fig. 1] un assemblage de raidissage en perspective auquel l'invention peut être appliquée ;
[Fig. 2] un point de fixation, en coupe à travers l'épaisseur des pièces ;
[Fig. 3] une section de lisse à laquelle l'invention peut être appliquée ;
[Fig. 4] une attache et les portions adjacentes de deux lisses et d'un cadre, en perspective ;
[Fig. 5] une autre attache ;
[Fig. 6] une troisième attache ;
[Fig. 7] une quatrième attache ;
[Fig. 8] une cinquième attache ;
[Fig. 9] un schéma de fabrication d'une lisse selon l'invention ;
[Fig. 10] l'ensemble obtenu, en coupe à travers les lisses.

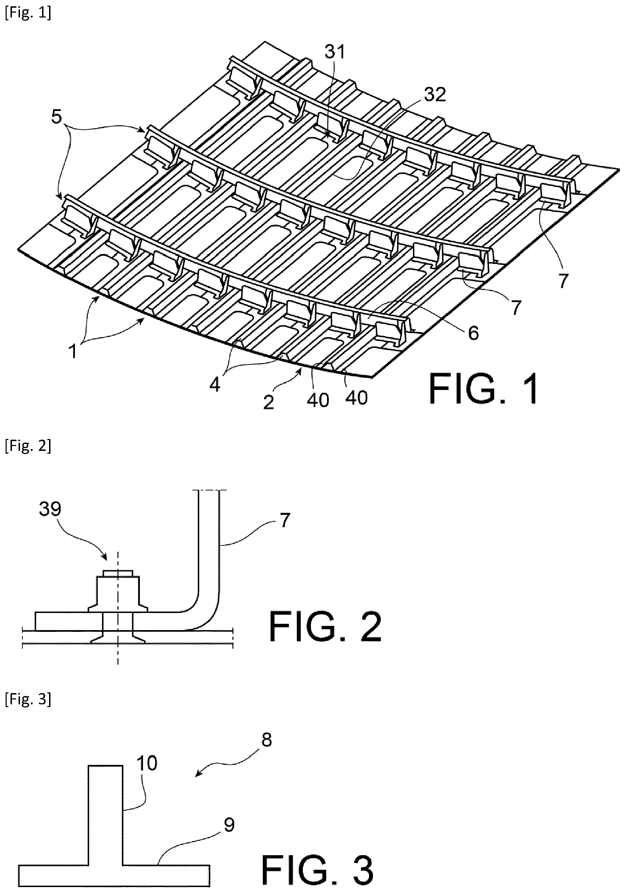

La figure 1 représente un assemblage de raidissage d'un fuselage 3 d'aéronef auquel l'invention peut être appliquée. Il comprend des lisses 1 longitudinales composées d'une semelle 2 posée sur le fuselage 3 et une âme 4 se dressant au-dessus de la semelle 2 et assurant plus spécialement le raidissage ; des cadres 5 de direction transversale et de forme circulaire, entrecroisés avec les lisses 1 et comprenant une âme 6 essentiellement plane ; et des attaches 7 reliant les lisses 1 aux cadres 5, par des points de fixation 39 aux lisses 1 et aux cadres 5 pouvant consister en des boulons (figure 2).

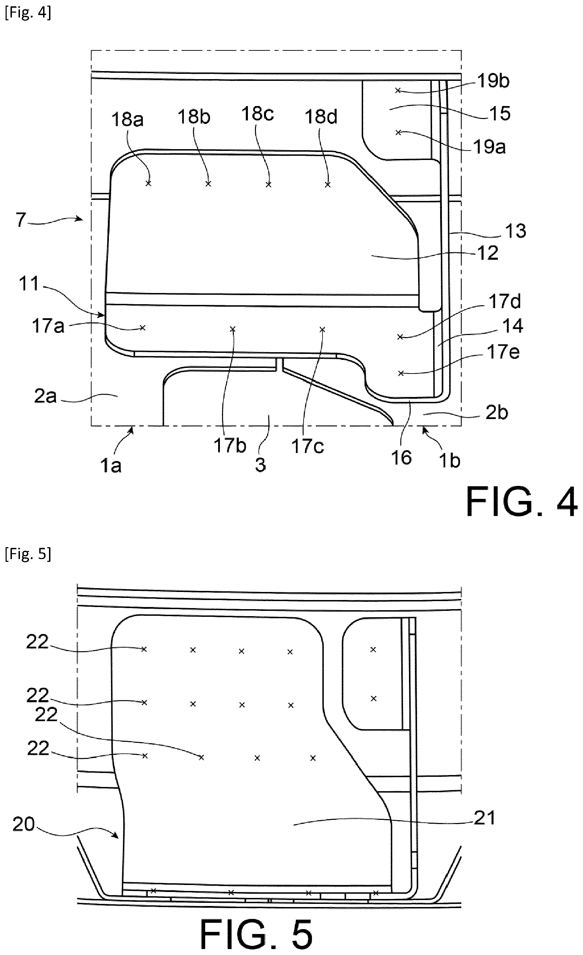

Ces différents constituants de l'assemblage peuvent prendre des formes diverses. Les lisses 1 représentées à la figure 1 ont ainsi une section dite en oméga, avec l'âme 4 à section en parallélogramme et la semelle 2 composée de deux ailes s'étendant des deux côtés de l'âme 4. Une lisse 8 à section en T, représentée à la figure 3 et composée d'une semelle 9 continue et d'une âme 10 plane, est aussi classique et l'invention pourrait lui être appliquée. Il en va de même pour les attaches 7, mieux représentées à la figure 4. Cette réalisation comporte une embase 11 posée sur les semelles 2a et 2b de deux lisses voisines 1a et 1b en les chevauchant, une nervure 12 perpendiculaire à l'embase 11 et posée sur l'âme 6 d'un des cadres 5, ainsi qu'une aile de stabilisation 13 se rattachant à un côté d'extrémité 14 de l'embase 11 et perpendiculaire à la fois à celle-ci et à la nervure 12, et comprenant une patte 15 de fixation à l'âme 6 du cadre 5, à côté de la nervure 12. L'embase 11 comporte un élargissement 16 près de la jonction 14. Elle est unie aux semelles 2a et 2b par cinq points de fixation, dont un premier point de fixation extrême 17a à la semelle 2a, un deuxième et un troisième points de fixation extrêmes 17d et 17e à l'autre des semelles 2b, et deux points de fixation intermédiaires 17b et 17c entre les points de fixation extrêmes 17a et 17d, respectivement à la semelle 2a et à la semelle 2b. Les points de fixation extrêmes 17d et 17e sont situés à l'élargissement 16, et forment une rangée de direction longitudinale dans le fuselage 3, perpendiculaire à la rangée constituée par les point de fixation 17a, b, c et d. La nervure 12 est reliée au cadre 5 par quatre points de fixation 18a à 18d disposés en une rangée transversale, et la patte 15 est reliée au cadre 5 par deux points de fixation 19a et 19b disposés en une rangée radiale. Comme précédemment, les directions longitudinale, transversale et radiale désigneront les directions principales de l'aéronef et de son fuselage 3.

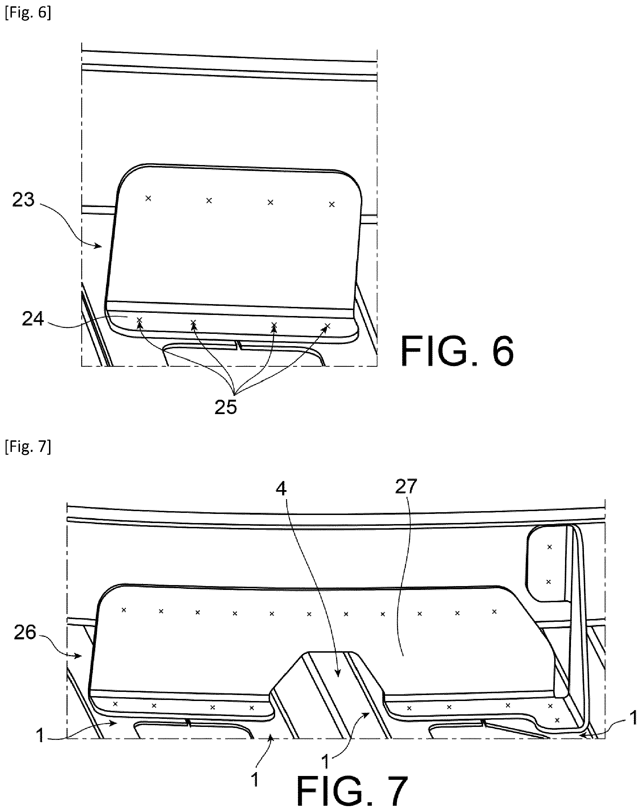

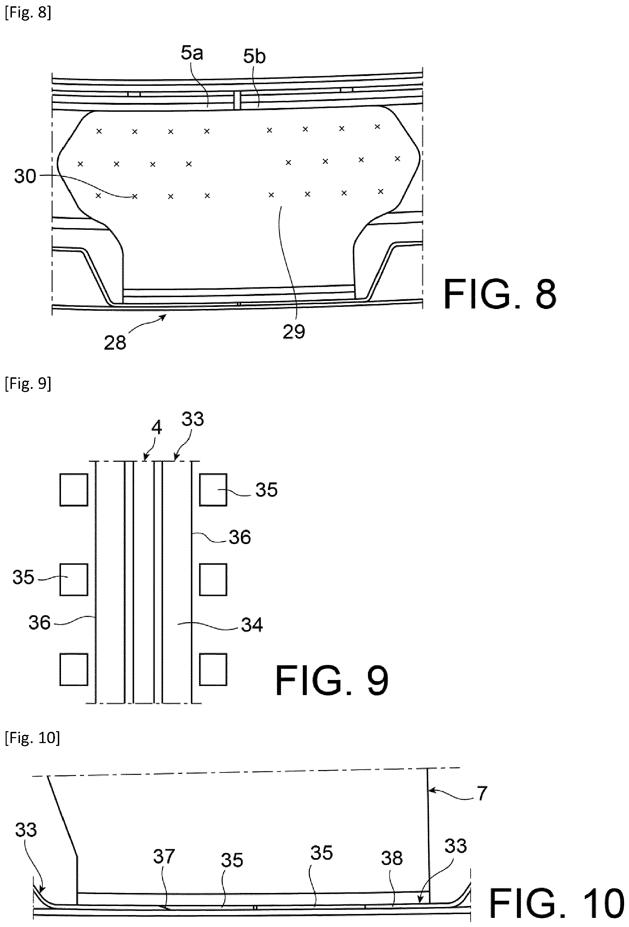

D'autres constructions possibles de l'attache reliant les lisses 1 ou 8 aux cadres 5 comprennent l'attache 20 de la figure 5, qui se distingue de la précédente par une nervure 21 plus haute en direction radiale et dotée de plusieurs rangées de points de fixation 22 au cadre 5, ces rangées transversales se superposant dans la direction radiale ; l'attache 23 de la figure 6 qui diffère de celle de la figure 4 en ce que l'aile de stabilisation est omise, l'embase 24 est dépourvue de l'élargissement 14, et les points de fixation 25 aux lisses 1 (ou 8) sont au nombre de quatre, disposés en une rangée unique correspondant aux points de fixation 17a à 17d ; l'attache 26 de la figure 7, analogue à une juxtaposition des réalisations des figures 4 et 6, où les nervures seraient combinées en une nervure 27 unique s'étendant par-dessus l'âme 4 ou 10 des lisses 1 ou 8, et dotée d'une embase composée des deux embases 11 et 24 déjà décrites, qui chevaucheraient respectivement les semelles 2 de trois lisses 1 successives ; l'attache 28 de la figure 8, originale en ce que la nervure 29 est élargie et dotée de points de fixation 30 nombreux pour relier entre eux deux segments 5a et 5b successifs du cadre 5 ; et d'autres encore.

On observe que dans toutes les réalisations décrites, les semelles 2 et 9 des lisses 1 ou 8, ou les ailes qui les composent, sont composées alternativement d'excroissances 31 placées sous les attaches, telles que 7, et de portions étroites 32 ailleurs, entre les excroissances 31. Les excroissances 31 ont la fonction essentielle de parachever la cohérence de l'assemblage en s'étendant sous presque toute la surface de l'embase 11 et en recevant plusieurs des points de fixation, comme les points intermédiaires 17b et 17c. Une quantité de matière importante est perdue dans les procédés de fabrication habituels, où les lisses 1 ou 8 sont construites d'une seule pièce à la largeur des excroissances 31 pour toutes les sections, puis usinées ou découpées pour former les parties amincies 32.

L'invention a été fondée sur la constatation que les points de fixation intermédiaire 17b et 17c, même s'ils sont nécessaires, sont soumis à des efforts nettement plus faibles que les points de fixation extrêmes. Dans l'exemple de la figure 4, on a ainsi constaté, pour un chargement plausible de traction exercé sur l'attache 7, que l'effort était transmis en étant distribué respectivement à 27 %, 9 %, 9 %, 38 % et 17 % par les points de fixation 17a, b, c, d et e.

Cette circonstance est utilisée dans l'invention pour une nouvelle constitution des lisses 1 ou 8 : la figure 9 montre qu'elles sont au départ composées de pièces disjointes et fabriquées séparément, et plus précisément d'une portion principale 33 comprenant l'âme 4 et une partie de semelle 34 ayant une largeur constante et correspondant à la largeur des portions amincies 32 ; et de plaques 35 à joindre aux bords 36 de la portion de semelle 34 pour donner les excroissances 31. Une jonction intime entre la portion principale 33 et les plaques 35 est effectuée pour donner une continuité de matière satisfaisante et une bonne capacité de transmission des efforts à travers les lisses 1 ou 8 reconstituées. Le procédé peut consister, dans le cas de polymères thermodurcissables ou thermoplastiques, en une co-cuisson de la portion principale 33 et des plaques 35 après qu'elles ont été assemblées. La figure 10 illustre que les jonctions 37 et 38 entre les portions principales 33 et les plaques 35 peuvent être obliques à la direction d'épaisseur des plaques 35, ou perpendiculaires à cette direction. Les jonctions peuvent être maintenues, avant la cuisson, par des pellicules adhésives sur les deux faces des raccords, qui s'incorporent ensuite à la lisse 1 ou 8 reconstituée. Il est possible que les plaques 35 soient construites en une matière différente des portions principales 33, ou en une structure différente en ce qui concerne la disposition des couches de matériaux composites par exemple. Les irrégularités éventuelles du matériau ou de la structure de part et d'autre des jonctions 37 et 38 ne devraient pas affecter sensiblement la résistance des lisses aux efforts mécaniques, si on considère que les excroissances 31 sont ordonnées à des points de fixation peu chargés.

Et comme la forme des lisses est parfaitement reconstituée, des attaches semblables à celles qu'on utilisait jusqu'à présent peuvent être conservées sans modifications.

## Revendications

1. Assemblage de raidissage d'un fuselage (3) d'aéronef, comprenant des lisses (1, 8) longitudinales, des cadres (5) transversaux croisant les lisses et des attaches (7, 20, 23, 26, 28) reliant les lisses aux cadres, les lisses comprenant chacune une semelle (2) adaptée à être posée sur le fuselage, les attaches comprenant une embase (11) posée sur les lisses en chevauchant les semelles de deux lisses voisines, **caractérisé en ce que** les lisses sont composées d'une portion principale (33) à section uniforme et de plaques (35) fabriquées séparément de la portion principale puis unies intimement à elle, les plaques étant distantes les unes des autres le long des lisses et situées entre les embases des attaches et le fuselage.

2. Assemblage de raidissage d'un fuselage d'aéronef selon la revendication 1, **caractérisé en ce que** les embases des attaches comprennent un point de fixation extrême (17a), ou une rangée extrême de points de fixation (17d, 17e) dirigée transversalement, reliant les attaches à la portion principale de chacune desdites lisses voisines (2a, 2b), et des points de fixation intermédiaires (17b, 17c) reliant les attaches à une des plaques (35) de chacune desdites lisses voisines (2a, 2b).

3. Assemblage de raidissage d'un fuselage d'aéronef selon la revendication 2, **caractérisé en ce que** le point de fixation extrême (17a) ou la rangée extrême est unique pour chacune desdites lisses voisines (2a, 2b), et les joints de fixation intermédiaire (17b, 17c) sont uniques pour chacune desdites lisses voisines (2a, 2b).

4. Assemblage de raidissage d'un fuselage d'aéronef selon l'une quelconque des revendications 1 à 3, **caractérisé en ce que** les portions principales (33) et les plaques (35) sont en polymère thermodurcissable ou thermoplastique.

5. Assemblage de raidissage d'un fuselage d'aéronef selon la revendication 4, **caractérisé en ce que** le polymère thermodurcissable ou thermoplastique de la portion principale (33) diffère du polymère thermodurcissable ou thermoplastique des plaques (35) pour chacune des lisses (1, 8).

6. Assemblage de raidissage d'un fuselage d'aéronefs selon l'une quelconque des revendications 1 à 5, **caractérisé en ce que** les portions principales et les plaques sont unies par des interfaces planes (37, 38).

7. Assemblage de raidissage d'un fuselage d'aéronef selon la revendication 6, **caractérisé en ce que** les interfaces planes (37) sont obliques en direction d'épaisseur des plaques.

## Patentansprüche

1. Anordnung zur Versteifung eines Flugzeugrumpfes (3), umfassend Längsholme (1, 8), die Holme kreuzende Querrahmen (5) und die Holme mit den Rahmen verbindende Befestigungselemente (7, 20, 23, 26, 28), wobei die Holme jeweils eine zum Aufsetzen auf den Rumpf geeignete Sohle (2) umfassen, wobei die Befestigungselemente einen Sockel (11) umfassen, der so auf den Holmen aufgesetzt ist, dass er die Sohlen zweier benachbarter Holme überlappt, **dadurch gekennzeichnet, dass** die Holme aus einem Hauptabschnitt (33) mit gleichmäßigem Querschnitt und getrennt vom Hauptabschnitt hergestellten und dann eng mit diesem verbundenen Platten (35) gebildet sind, wobei die Platten entlang der Holme voneinander beabstandet sind und sich zwischen dem Sockel der Befestigungselemente und dem Rumpf befinden.

2. Anordnung zur Versteifung eines Flugzeugrumpfes nach Anspruch 1, **dadurch gekennzeichnet, dass** die Sockel der Befestigungselemente einen äußersten Befestigungspunkt (17a) oder eine äußerste Reihe von quer ausgerichteten Befestigungspunkten (17d, 17e), die die Befestigungselemente mit dem Hauptabschnitt jedes der benachbarten Holme (2a, 2b) verbinden, und mittlere Befestigungspunkte (17b, 17c), die die Befestigungselemente mit einer der Platten (35) jedes der benachbarten Holme (2a, 2b) verbinden, umfasst.

3. Anordnung zur Versteifung eines Flugzeugrumpfes nach Anspruch 2, **dadurch gekennzeichnet, dass** der äußerste Befestigungspunkt (17a) bzw. die äußerste Reihe für jeden der benachbarten Holme (2a, 2b) einzigartig ist und die Zwischenbefestigungsverbindungen (17b, 17c) für jeden der benachbarten Holme (2a, 2b) einzigartig sind.

4. Anordnung zur Versteifung eines Flugzeugrumpfes nach einem der Ansprüche 1 bis 3, **dadurch gekennzeichnet, dass** die Hauptabschnitte (33) und die Platten (35) aus duroplastischem oder thermoplastischem Polymer sind.

5. Anordnung zur Versteifung eines Flugzeugrumpfes nach Anspruch 4, **dadurch gekennzeichnet, dass** sich für jeden der Holme (1, 8) das duroplastische bzw. thermoplastische Polymer des Hauptabschnitts (33) vom duroplastischen bzw. thermoplastischen Polymer der Platten (35) unterscheidet.

6. Anordnung zur Versteifung eines Flugzeugrumpfes nach einem der Ansprüche 1 bis 5, **dadurch gekennzeichnet, dass** die Hauptabschnitte und die Platten durch ebene Schnittstellen (37, 38) miteinander verbunden sind.

7. Anordnung zur Versteifung eines Flugzeugrumpfes nach Anspruch 6, **dadurch gekennzeichnet, dass** die ebenen Schnittstellen (37) schräg in Richtung der Plattendicke verlaufen.

## Claims

1. Assembly for stiffening an aircraft fuselage (3), comprising longitudinal stringers (1, 8), transverse frames (5) crossing the stringers, and attachments (7, 20, 23, 26, 28) connecting the stringers to the frames, the stringers each comprising a sole (2) designed to be placed on the fuselage, the attachments comprising a base (11) placed on the stringers overlapping the soles of two adjacent stringers, **characterized in that** the stringers are made up of a main portion (33) having a uniform section and of plates (35) manufactured separately from the main portion and then joined intimately thereto, the plates being separated from one another along the stringers and situated between the bases of the attachments and the fuselage.

2. Assembly for stiffening an aircraft fuselage according to Claim 1, **characterized in that** the bases of the attachments comprise an extreme fixing point (17a), or a transversely directed extreme row of fixing points (17d, 17e), connecting the attachments to the main portion of each of said adjacent stringers (2a, 2b), and intermediate fixing points (17b, 17c) connecting the attachments to one of the plates (35) of each of said adjacent stringers (2a, 2b).

3. Assembly for stiffening an aircraft fuselage according to Claim 2, **characterized in that** there is a single extreme fixing point (17a) or extreme row for each of said adjacent stringers (2a, 2b), and there is a single intermediate fixing point (17b, 17c) for each of said adjacent stringers (2a, 2b).

4. Assembly for stiffening an aircraft fuselage according to any one of Claims 1 to 3, **characterized in that** the main portions (33) and the plates (35) are made of thermoplastic or thermosetting polymer.

5. Assembly for stiffening an aircraft fuselage according to Claim 4, **characterized in that** the thermoplastic or thermosetting polymer of the of the main portion (33) differs from the thermoplastic or thermosetting polymer of the plates (35) for each of the stringers (1, 8).

6. Assembly for stiffening an aircraft fuselage according to any one of Claims 1 to 5, **characterized in that** the main portions and the plates are joined by flat interfaces (37, 38).

7. Assembly for stiffening an aircraft fuselage according to Claim 6, **characterized in that** the flat interfaces (37) are oblique in the thickness direction of the plates.
